# EUROPEAN PATENT SPECIFICATION

(11) **EP 2 590 088 B1**
(45) Date of publication and mention of the grant of the patent: **29.07.2015**
(21) Application number: 12007375.4
(22) Date of filing: 26.10.2012
(51) Int. Cl.: G06F 17/30

(54) **Database queries enriched in rules**
Mit Regeln angereicherte Datenbankanfragen
Requêtes de base de données enrichies en règles

(30) Priority: 03.11.2011 US 201113288828
(43) Date of publication of application: 08.05.2013
(73) Proprietor: SAP SE, 69190 Walldorf (DE)
(72) Inventor: Lohiya, Nitesh, 69190 Walldorf (DE); Ziegler, Carsten, 69190 Walldorf (DE); Beuter, Hans-Georg, 69190 Walldorf (DE); Paul, Joydeep, 69190 Walldorf (DE)
(74) Representative: Müller-Boré & Partner Patentanwälte PartG mbB

(56) References cited:
- US-A1- 2005 222 996
- US-A1- 2006 218 132
- US-A1- 2007 179 966
- AGRAWAL R ET AL: "DATABASE MINING: A PERFORMANCE PERSPECTIVE", IEEE TRANSACTIONS ON KNOWLEDGE AND DATA ENGINEERING, IEEE SERVICE CENTER, LOS ALAMITOS, CA, US, vol. 5, no. 6, 1 December 1993 (1993-12-01), pages 914-925, XP002048520, ISSN: 1041-4347, DOI: 10.1109/69.250074
- "QUERY SIMPLIFICATION BY DEFINING LABELS FOR EXPRESSIONS", IBM TECHNICAL DISCLOSURE BULLETIN, INTERNATIONAL BUSINESS MACHINES CORP. (THORNWOOD), US, vol. 33, no. 3B, 1 August 1990 (1990-08-01), page 450/451, XP000124418, ISSN: 0018-8689

## Description

### BACKGROUND

The present invention relates to storage of data in databases, and in particular, to the formulation of database queries that consider complex conditional logic underlying certain business rules.

Unless otherwise indicated herein, the approaches described in this section are not prior art to the claims in this application and are not admitted to be prior art by inclusion in this section.

Databases comprising are highly useful tools allowing users to manage complex relationships between different types of data. For example, a business rule is a composition of single or multiple logical or computational expressions. Such rules may find expression within database structures comprising rows and columns.

Most database engines allow querying of data from the database, by writing statements in the application level language in which the database was created (for example Structured Query Language -SQL). These application level language statements can range from very simple queries, to complex ones involving nested sub-queries or joins, etc.

Database queries can be enriched or modified using custom built functions such as SUM, AVERAGE, MAX, MIN etc. These functions operate on a single column. An example is shown below:
SELECT Name, Score
   FROM Student_Score
   WHERE Score = (*select Max (Score) from Student_Score*);

Note that the nested query comprises a Max function. The result of this query is then used in the outer query.

Another example illustrates conventional use of built-in functions in SQL queries:

```
 SELECT model, variant, price
 FROM Cars
 WHERE (
  select count(*) from Cars as C
  where C.model = Cars.model and C.price < Cars.price
  ) <= 2;
```

A function is used in this nested query. The result is then employed in a logical comparison.

However, there are no known provisions for adding complex condition processing in an SQL statement. For example, such a complex condition could describe a decision flow based on a decision tree, whose nodes are modeled as conditions and leaves as results.

The present disclosure addresses these and other issues with systems and methods for implementing database querying with rule-processing capability, as a functional mechanism similar to standard aggregation functions.

Document US 2007/0179966 A1 relates to representing decision trees in a relational database. This is done by providing a direct acyclic graph, encoding a tree structure by including in each node of the graph a parent-child relationship of the node with other nodes of the graph, encoding in each node information relating to a split represented by the node, and encoding in each node a target histogram.

### SUMMARY

Embodiments of the invention allow complex conditional statements to be considered in formulating database queries. Business rules are modeled by a user, and then used in the definition of a query to the database. Users model rules based upon a set of ready-to-use abstract structures, such as decision trees, decision tables, or formulas. The system of rules evaluation contains a built-in processing function provided with a unique identifier of the rule. This function processes the rule, taking the input data set from the context of the application level language (e.g. SQL) in which the database was created. This rule-processing capability may be implemented as a functional mechanism similar to standard aggregation functions (e.g. SUM, AVG, MAX, MIN), rather than by extending the application level language itself.

An embodiment of a computer-implemented method as claimed in claim 1 comprises providing in a non-transitory computer readable storage medium, a database created in an application level language and comprising data organized in rows and columns; creating a model of a business rule based upon an abstract structure; implementing the model as a functional mechanism having a unique identifier; posing a query to the database including the unique identifier; deriving a value from the database based upon the query and the functional mechanism; and displaying the value to a user in response to the query:

An embodiment of a non-transitory computer readable storage medium embodies a computer program for performing the method as claimed, said method comprising: providing a database created in an application level language and comprising data organized in rows and columns; creating a model of a business rule based upon an abstract structure; implementing the model as a functional mechanism having a unique identifier; posing a query to the database including the unique identifier; deriving a value from the database based upon the query and the functional mechanism; and displaying the value to a user in response to the query.

An embodiment of a computer system as claimed in claim 3 comprises one or more processors; and a software program, executable on said computer system, the software program configured to: provide a database created in an application level language and comprising data organized in rows and columns; create a model of a business rule based upon an abstract structure; implement the model as a functional mechanism having a unique identifier; pose a query to the database including the unique identifier; derive a value from the database based upon the query and the functional mechanism; and display the value to a user in response to the query.

In certain examples, the abstract structure comprises a decision tree. In some embodiments, the abstract structure comprises a decision table. In some embodiments, the abstract structure comprises a formula expression.

According to certain embodiments, deriving the value comprises reading rule metadata from a rule repository. In some embodiments deriving the value comprises reading context information from the query.

The following detailed description and accompanying drawings provide a better understanding of the nature and advantages of the present invention.

### BRIEF DESCRIPTION OF THE DRAWINGS

Figure 1 shows an example of an application level statement including such a complex "where clause".
Figure 2 shows an example of an alternative conventional approach involving writing a procedural language program, and then filtering the data.
Figure 3 shows a simplified view of a decision table.
Figure 4 shows a simplified view of a decision tree.
Figure 5 shows a simplified view of a formula expression.
Figure 6 shows an example an SQL statement with a rule function according to an embodiment.
Figure 7 shows a highly simplified schematic view of a querying approach according to an embodiment.
Figure 7A is a simplified block diagram showing operation of an embodiment of a rules evaluation system.
Figure 7B shows a simplified diagram showing an embodiment of a process flow.
Figure 8 shows an example of a computer system.

### DETAILED DESCRIPTION

Described herein are techniques for providing a database query that considers complex conditional statements associated with certain business rules. These rules can be modeled by a user using patterns such as a decision table, decision tree, or formula. Rule-processing capability may be implemented in a query as a functional mechanism similar to the standard aggregation functions.

A business rule is a composition of single or multiple logical or computational expressions. Increasingly, there is a need for data from the database table to be filtered based on the complex business logic embodied within a rule.

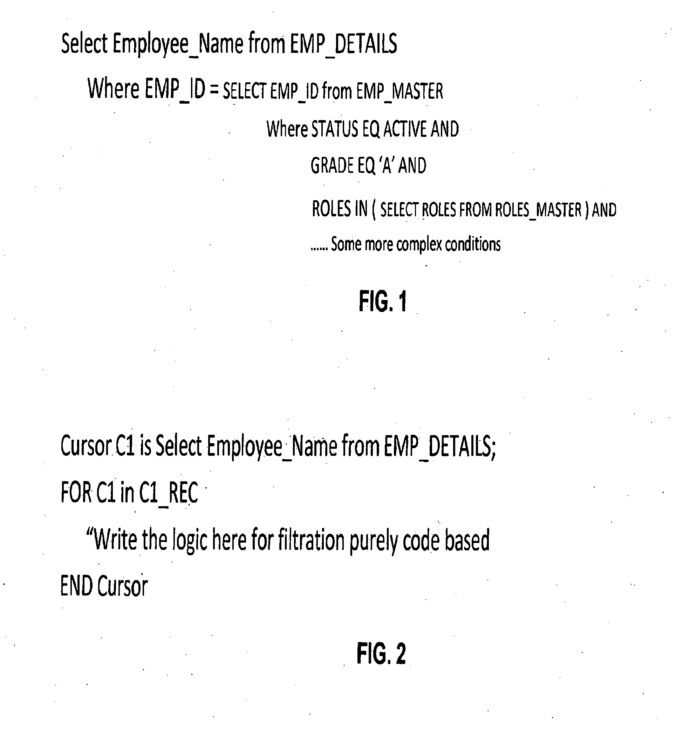

Conventionally, the application of business rules to database searching has been handled in one of two ways. A first conventional approach is to express the database query in the application level language including a complex "where clause". An example of an application level statement including such a complex "where clause" is shown in Figure 1.

A second conventional approach involves two steps: writing a procedural language program, and then filtering the data utilizing processing power. An example of this second conventional approach is shown in Figure 2.

The conventional approaches just described, may offer certain disadvantages. One disadvantage is a relative lack of transparency for the business user of the database.

In particular, both conventional approaches distance the business user from implementation of the underlying logic. Because complex logic is not modeled but instead coded (either as application level code or as procedural language program), the ability of the business user to interact with the database on an intuitive level is diminished.

A second potential disadvantage relates to the reuse of logic. With stored procedures, such reusability can be achieved. However, the stored procedures operate outside of the SQL query.

By contrast, incorporating a rule inside a SQL query according to embodiments of the present invention as discussed in detail below, allows a complex derivation or filtering to be achieved at the same time data is fetched. This reduces the need to write additional logic.

Finally, the second conventional approach (expression of a procedural language program in combination with filtering), may offer an additional disadvantage by consuming processing power. In particular, the second (filtering) step of that conventional approach may divert processing resources from other tasks, adversely affecting operational performance.

By contrast, embodiments of the present invention may adopt a different approach. Specifically, complex rules are first modeled utilizing certain tools, and then the modeled rules are used in defining a query to the database.

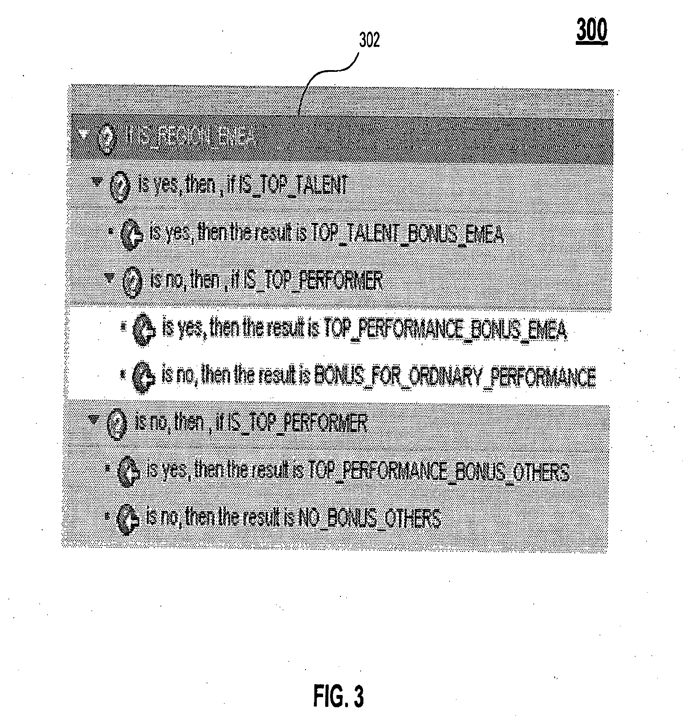

To explain the modeling of business rules, users are provided with a set of ready-to-use abstract structures describing the logic of the rule. One type of such an abstract structure for explaining rules, is a decision tree. An example of a decision tree is shown in Figure 3.

A decision tree 300 is a binary tree which represents a multi-level decision making flow from the root node 302 down to the leaf node 304. Each node of the tree represents one condition, the fulfillment of which will result in processing of the "true" branch 306. Lack of fulfillment of the condition with result in processing of the "false branch" 308.

This processing of the decision tree will continue until a leaf node is reached. This leaf node is then returned as the result of the current processing (e.g. in response to the posed query). The result is then displayed to the database user.

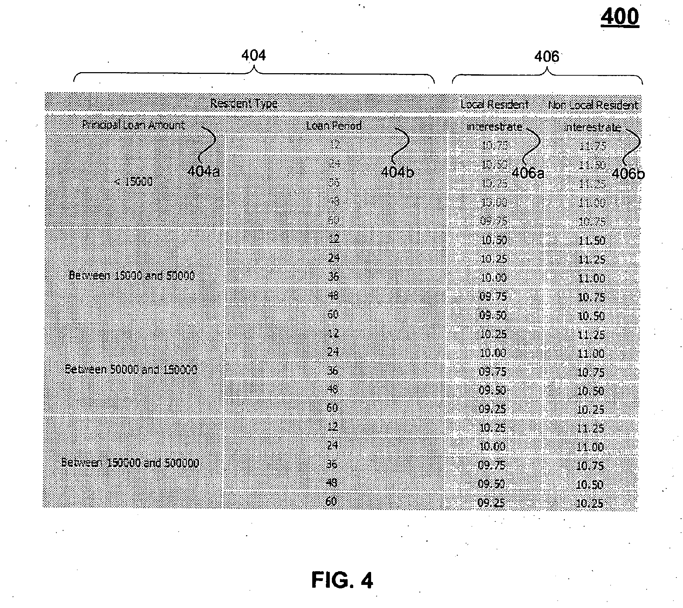

Another possible type of an abstract structure upon which a business rule may be modeled, is a decision table. An example of a decision table is shown in Figure 4.

A decision table 400 is a matrix structure containing condition columns 404 (here Principal Loan Amount 404a and Loan Period 404b) and result columns 406 (here Local Resident interest rate 406a and Non Local Resident interest rate 406b). The decision table is processed top to bottom, from left to right. Whenever a single row is matched, the corresponding result columns are returned as the result.

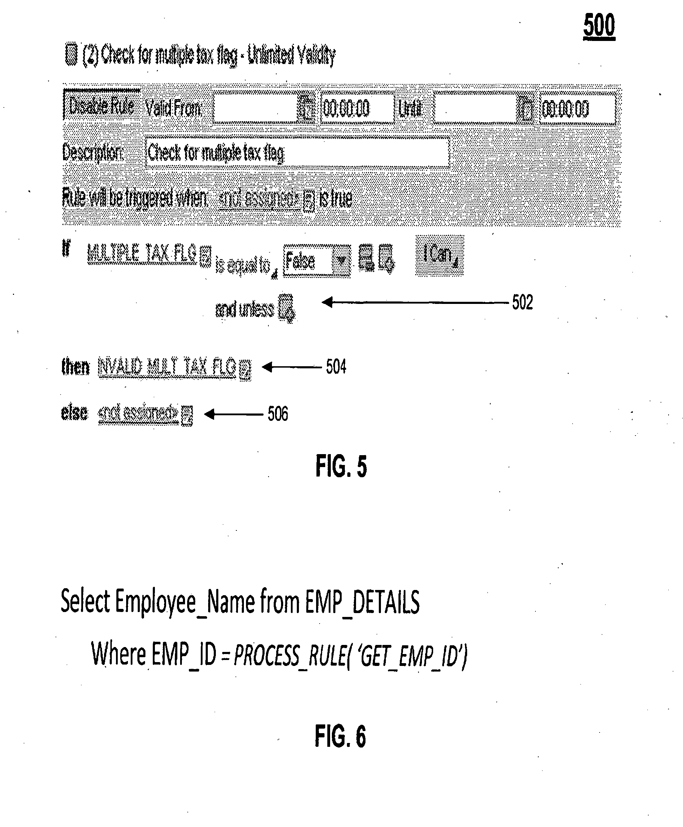

Still another example of an abstract structure upon which a business rule may be modeled, is a formula expression. FIG. 5 shows a simplified view of such a formula expression 500, here in the form of an IF-THEN-ELSE rule. In particular, this particular rule evaluates the truth of a complex conditional statement 502 to produce a first result 504 if the statement is true, and a second result 506 if the statement is false.

A system of rules evaluation according to embodiments of the present invention, will contain in-built processing functions provided with the unique identifier of the rule. These functions will process the rule, taking the input data set from the context of the application level language (e.g. SQL).

Embodiments of the present invention may be based upon providing the rules capability as a functional mechanism, similar to the standard aggregation functions like SUM, AVG, MAX, MIN etc. This avoids needing to extend the application level language itself.

Figure 6 shows an example of how a SQL statement with the rule capability function may be provided. In particular, the rule modeled from business logic has the unique identifier 'GET_EMP_ID', and is used in querying the database EMP_DETAILS.

The example of Figure 6 may be contrasted with the conventional approaches described above. In particular, the example of Figure 6 avoids the complex "where clause" of Figure 1, and also avoids the need to write logic for filtration that is purely code based as shown in Figure 2.

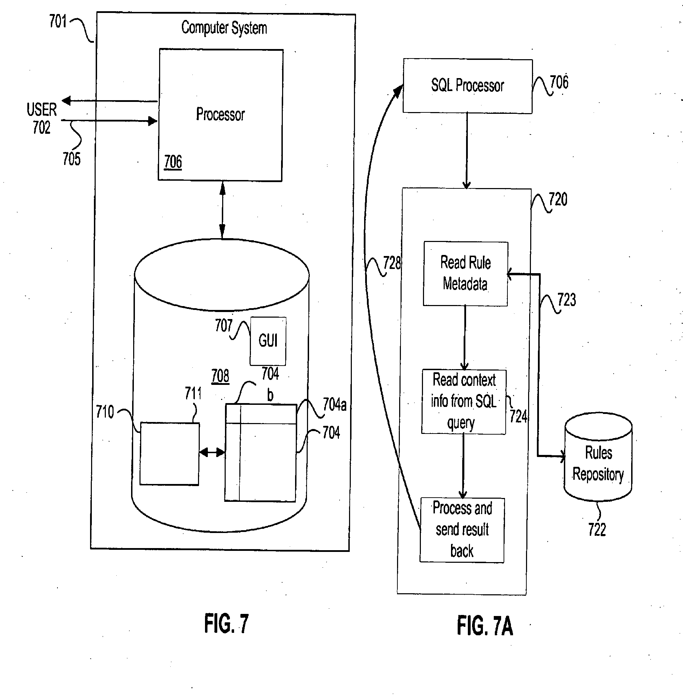

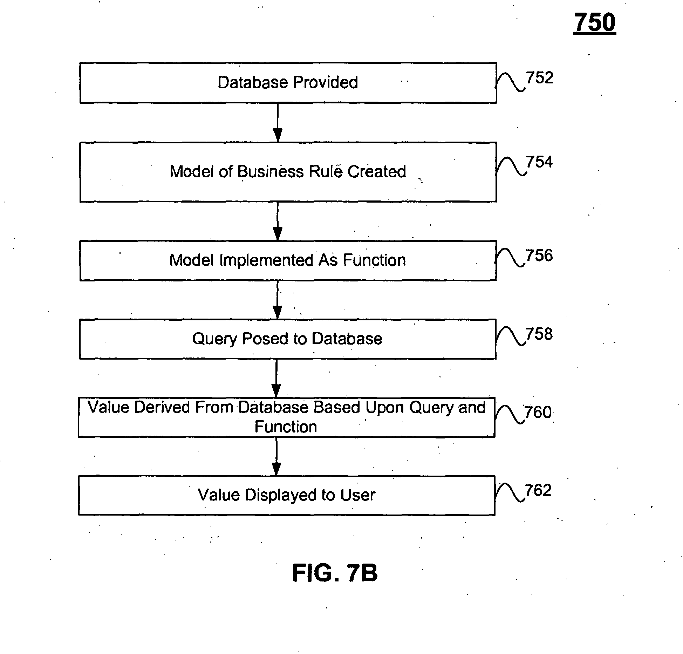

Figure 7 shows a highly simplified schematic view of an embodiment of a querying approach. Computer system 701 comprises processor 706 that is in communication with non-transitory computer readable storage medium 708. The non-transitory computer readable storage medium 708 has stored thereon data in the form of a database 704 comprising rows 704a and columns 704b.

Code stored on the non-transitory computer-readable storage medium provides instructions to the processor to perform one or more functions. For example, certain code defines a graphic user interface (GUI) 707 allowing the user 702 to pose queries 705 to the database via the processor.

While Figure 7 shows a particular embodiment wherein the code forming the GUI is present on the same non-transitory computer readable storage medium as the code for the database, this is not required. According to certain embodiments, the code for the GUI could be stored on a different non-transitory computer readable storage medium, for example one located at a remote site and in communication with the database through a computer network in which the database is centrally stored.

Code 710 stored on the non-transitory computer-readable storage medium also provides instructions to the processor to recognize the rule function capability present in a query according to certain embodiments. For example, the query 705 may include a rule function associated with a unique identifier that reflects the logic underlying a particular business rule modeled by a user.

Accordingly, code 710 stored on the computer-readable storage medium may recognize that unique identifier, and then implement the functional operation to search the data according to that rule. In particular, a rule evaluation system may contain a rule repository (database of available rules). The system therefore searches the repository for the particular rule. Once found, the system executes the rule and sends the result back to the SQL runtime.

Operation of a rules evaluation system according to an embodiment is further illustrated and described below in connection with Figure 7A. In particular, this figure considers the following SQL query enriched with a function to process a pre-defined rule.
SELECT * FROM CAR_MODELS
WHERE employee_eligibility=PROCESS_RULE('CHECK_EIGIBILITY')

As shown in Figure 7A, once the SQL query evaluator 706 identifies the statement PROCESS_RULE, it will trigger the Rules Runtime 720. The Rules Runtime 720 will in turn search a rule repository 722 for the input rule CHECK_ELIGIBILTY.

Figure 7A shows how the Rules Runtime 720 will process the rule. The steps include reading 723 the metadata of the rule from the repository 722, and reading 724 the context information supplied by the SQL processor. Once this has been done, the rule will be evaluated and a result will be sent back to the SQL processor as shown in 728. Interaction with the rules repository, rule metadata, and context information according to embodiments of the present invention, may be further understood with reference to the following examples.

### Rule Repository

In general, a rule repository comprises a database including details regarding rules (metadata) and rule content. The rule repository is referenced for rule processing.

When a user models a rule using an abstract structure such as a decision table, decision tree, or formula, much information about the rule is provided. Examples of such information are the data objects used in the rule. This information about the rule is persisted in the rule repository.

An example of a rule repository is described below, for the case where a rule is being modeled as a decision table. The following decision table (CHECK_ELIGIBILITY) is created for the rule:

| **AGE** | **GENDER** | **ELIGIBILITY** |
|---|---|---|
| >18 | M | True |
| >60 | M | False |

In the above decision table, AGE and GENDER comprises the input, and ELIGIBILITY is the result column. The first line is the header which tells what are the data objects involved in this decision table, namely AGE, GENDER and ELIGIBILITY. It also identifies the condition columns (AGE and GENDER) and the result column (ELIGIBILITY).

The following lines of the decision contain various combinations of input value conditions and their corresponding result. All this information comprises rule metadata, the content which is persisted in the rule repository.

When the rule processing is triggered, the system fetches the entire information as shown above from the repository and starts processing based on the input values provided. For instance if the AGE value supplied is 25 and GENDER value as 'M', then the system evaluates the result as True.

### Rule Context

The following database table (CUST_INFO) is considered for purposes of illustrating rule context information.

| NAME | AGE | GENDER | MARITAL STATUS | PROFESSION | NATIONALITY |
|---|---|---|---|---|---|
| John Andrew | 25 | M | Single | Marketing | American |
| Beena Dicosta | 24 | F | Married | Sales executive | British |
| Jammy | 35 | M | Married | People Manager | American |

In this particular example, the following query may be posed to this database table:
**SELECT** *name*, *nationality* **FROM** *CUST_INFO*
   **WHERE** PROCESS_RULE( 'CHECK_ELIGIBILITY') = True.

The above SQL query triggers processing of the rule 'CHECK_ELIGIBILITY', whose metadata is in the decision table shown in the Rule Repository described above. According to embodiments of the present invention, the rule runtime system obtains the rule metadata as explained previously, and also ascertains the context which will be supplied to the rule. Here, the term context refers to the input values that will be provided to the rule.

Based upon the above query, the input (context) values may not be clear enough. Accordingly, the rules runtime identifies the context from the table information provided. In the above query, the table CUST_INFO contains as its fields AGE and GENDER.

The runtime system processes the table rows, selects values from these, columns and supplies it to the runtime system. If the rule processing leads to a true value, the corresponding row columns Name and Nationality become part of the result table. If the table does not contain the fields necessary for the rule evaluation, then a runtime exception will be thrown.

Figure 7B shows a simplified diagram showing an embodiment of a process flow 750. In a first step 752, a database created in an application level language and comprising data organized in rows and columns, is provided in a non-transitory computer readable storage medium. In a second step 754, a model of a business rule is created based upon an abstract structure, for example a decision tree etc. In a third step 756, the model is implemented as a functional mechanism having a unique identifier. In a fourth step 758, a query is posed to the database including the unique identifier. In a fifth step 760, a value is derived from the database based upon the query and the functional mechanism. As mentioned previously, this derivation may be based upon metadata of the rule and context information of the query. In a sixth step 762, the value is displayed to a user in response to the query.

Embodiments of the present invention may offer certain advantages over conventional querying approaches. One possible benefit is the ability of business users to readily model their own complex logical statements (e.g. rules in the form of a decision table, decision tree etc.), and then use these complex logical statements in posing a database query.

Complex business logic can be embedded in the queries with the aid of the modeled rules. For example, as discussed in detail in connection with Figure 6, a query can be formulated to identify employees in the database which follow certain rules. These rules can be visualized and modeled by a business user, as a decision table for example, without having to be expressed in either the application level code, or as a procedural level computer program.

Another possible benefit offered by embodiments of the present invention, is the increased transparency of the query and database performance, to a business user. This promotes the ability of the business users to influence creation of a complex database query in an intuitive manner that returns the desired results.

Moreover, embodiments of the present invention promote efficiency by allowing logic to be reused. Specifically, by virtue of their being implemented in a query as a functional mechanism similar to the standard aggregation functions, the rules are easily reusable in other queries.

Finally, with the current proliferation of in-memory technologies, processing rules in the form of queries on the data set, is no longer a performance bottleneck. Embodiments of the present invention may avoid the need for certain conventional processing logic that is typically conventionally written inside the application layer, thereby permitting a lean application stack and enhanced speed of performance.

The apparatuses, methods, and techniques described herein may be implemented as a computer program (software) executing on one or more computers. The computer program may further be stored on a non-transitory computer readable medium. The non-transitory computer readable medium may include instructions for performing the processes described.

In the following description, for purposes of explanation, examples and specific details are set forth in order to provide a thorough understanding of various embodiments. It will be evident, however, to one skilled in the art that the present invention as defined by the claims may include some or all of the features in these examples alone or in combination with other features described below, and may further include modifications and equivalents of the features and concepts described herein.

The computer system may comprise a software server. A number of software servers together may form a cluster, or logical network of computer systems programmed with software programs that communicate with each other and work together to process requests.

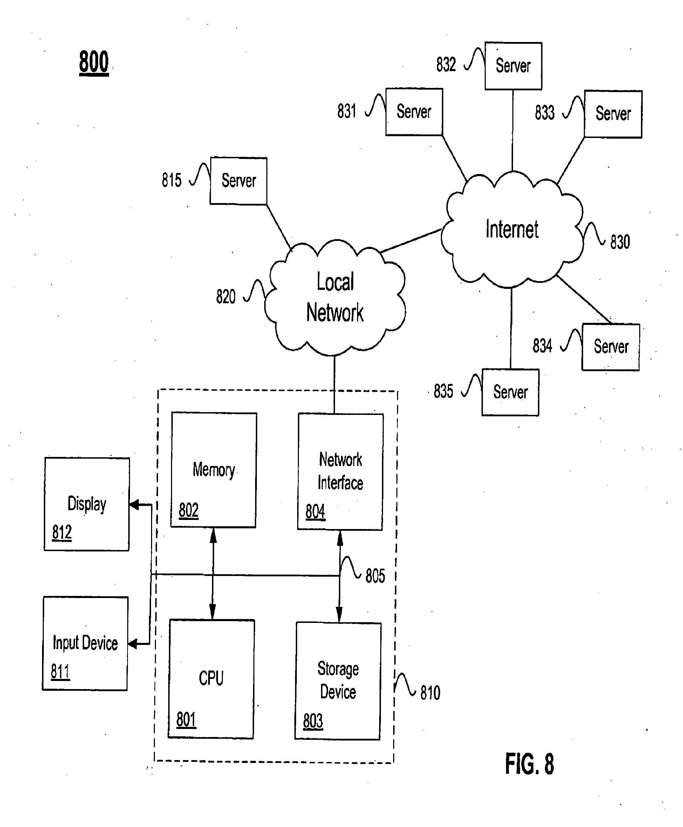

An example computer system 810 is illustrated in Fig. 8. Computer system 810 includes a bus 805 or other communication mechanism for communicating information, and a processor 801 coupled with bus 805 for processing information.

Computer system 810 also includes a memory 802 coupled to bus 805 for storing information and instructions to be executed by processor 801, including information and instructions for performing the techniques described above, for example. This memory may also be used for storing variables or other intermediate information during execution of instructions to be executed by processor 801. Possible implementations of this memory may be, but are not limited to, random access memory (RAM), read only memory (ROM), or both.

A storage device 803 is also provided for storing information and instructions. Common forms of storage devices include, for example, a hard drive, a magnetic disk, an optical disk, a CD-ROM, a DVD, a flash memory, a USB memory card, or any other medium from which a computer can read.

Storage device 803 may include source code, binary code, or software files for performing the techniques above, for example. Storage device and memory are both examples of computer readable media.

Computer system 810 may be coupled via bus 805 to a display 812, such as a cathode ray tube (CRT) or liquid crystal display (LCD), for displaying information to a computer user. An input device 811 such as a keyboard and/or mouse is coupled to bus 805 for communicating information and command selections from the user to processor 801. The combination of these components allows the user to communicate with the system. In some systems, bus 805 may be divided into multiple specialized buses.

Computer system 810 also includes a network interface 804 coupled with bus 805. Network interface 804 may provide two-way data communication between computer system 810 and the local network 820. The network interface 804 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 804 sends and receives electrical, electromagnetic, or optical signals that carry digital data streams representing various types of information.

Computer system 810 can send and receive information, including messages or other interface actions, through the network interface 804 across a local network 820, an Intranet, or the Internet 830. For a local network, computer system 810 may communicate with a plurality of other computer machines, such as server 815. Accordingly, computer system 810 and server computer systems represented by server 815 may form a cloud computing network, which may be programmed with processes described herein.

In an example involving the Internet, software components or services may reside on multiple different computer systems 810 or servers 831-835 across the network. The processes described above may be implemented on one or more servers, for example. A server 831 may transmit actions or messages from one component, through Internet 830, local network 820, and network interface 804 to a component on computer system 810. The software components and processes described above may be implemented on any computer system and send and/or receive information across a network, for example.

Particularly, there is provided a non-transitory computer readable storage medium embodying a computer program for performing a method, said method comprising: providing a database created in an application level language and comprising data organized in rows and columns; creating a model of a business rule based upon an abstract structure; implementing the model as a functional mechanism having a unique identifier; posing a query to the database including the unique identifier; deriving a value from the database based upon the query and the functional mechanism; and displaying the value to a user in response to the query.

Particularly, the abstract structure comprises a decision tree. Further particularly, the abstract structure comprises a decision table. Further particularly, the abstract structure comprises a formula expression. Further particularly, deriving the value comprises reading a rule metadata from a rule repository. Further particularly, deriving the value comprises reading context information from the query.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the scope of the invention as defined by the claims.

## Claims

1. A computer-implemented method comprising:
providing in a non-transitory computer readable storage medium (708), a database (704) created in an application level language and comprising data organized in rows (704a) and columns (704b);
storing, in a repository (722), a model of a business rule created by a user (702), said model being a decision table which is a matrix structure containing condition columns (404) and result columns (406), the repository (722) including metadata and rule content, the metadata including various combinations of input value conditions in the condition columns and their corresponding result in the result columns;
receiving from the user (702) through a graphical user interface a query (705) to the database (704), wherein the query (705) is enriched with a function to process the business rule provided with a unique identifier of the rule;
processing the query (705) to generate a corresponding result from the database (704) including accessing the rows (704a) and columns (704b) of the database (704) in accordance with the query (705) and applying the business rule to the data accessed from the rows and columns, said applying the business rule including:
searching the repository (722) for the input rule identified by the unique identifier;
reading (723) the metadata of the rule from the repository (722);
identifying context information to be supplied to the rule on the basis of the query of the database, said context information consisting of input values from the accessed rows (704a) and columns (704b) of the database (704) that will be provided to the rule;
reading (724) said context information supplied by a processor of the application level language in which the database (704) was created when executing the query of the database,;
evaluating the rule based on the provided input values by processing the decision table from top to bottom and from left to right, wherein wherever a single row of the decision table is matched, the corresponding result columns are returned as the result, the matching being based on the correspondence between the provided input values and the condition columns of the decision table; and
sending back the result to the processor of the application level language in which the database (704) was created;
and
displaying the result to the user (702) in response to the query (705).

2. A computer program product comprising computer-readable instructions which, when loaded and executed on a suitable system, perform the steps of a method according to claim 1.

3. A computer system (701) comprising:
one or more processors (706);
a software program (710), executable on said computer system (701), the software program (710) configured to perform a method according to claim 1.

## Patentansprüche

1. Ein computerimplementiertes Verfahren, das Folgendes umfasst:
bereitstellen, in einem nicht flüchtigen, computerlesbaren Speichermedium (708), einer Datenbank (704), die in einer Sprache auf Anwendungsstufe erstellt worden ist und die Daten umfasst, die in Zeilen (704a) und Spalten (704b) gegliedert sind;
speichern, in einem Repositorium bzw. Repository (722), eines Modells einer von einem Nutzer (702) erzeugten Geschäftsregel, wobei das besagte Modell eine Entscheidungstabelle ist, die eine Matrixstruktur ist, die Bedingung-Spalten (404) und Resultat-Spalten (406) enthält, wobei das Repository (722) Metadaten und Regelinhalte enthält, wobei die Metadaten mehrere Kombinationen aus Bedingungen zu Eingangswerten in den Bedingung-Spalten und ihre entsprechenden Resultate in den Resultat-Spalten enthalten;
empfangen vom Nutzer (702) über eine grafische Benutzerschnittstelle einer Anfrage (705) an die Datenbank (704), wobei die Anfrage (705) mit einer Funktion zur Verarbeitung der mit einer eindeutigen Kennung der Regel versehenen Geschäftsregel angereichert wird;
verarbeiten der Anfrage (705), um ein entsprechendes Resultat aus der Datenbank (704) zu erzeugen, was Folgendes beinhaltet: zugreifen auf die Zeilen (704a) und Spalten (704b) der Datenbank (704) entsprechend der Anfrage (705) und anwenden der Geschäftsregel auf die Daten des Zugriffs aus den Zeilen und Spalten, wobei das genannte Anwenden der Geschäftsregel Folgendes enthält:
suchen des Repositorys (722) für die durch die eindeutige Kennung identifizierte Eingaberegel;
lesen (723) der Metadaten der Regel aus dem Repository (722);
identifizieren von Kontextinformation, die der Regel anhand der Datenbankanfrage zuzuführen ist, wobei die genannte Kontextinformation aus Eingabewerten aus den abgerufenen Zeilen (704a) und Spalten (704b) der Datenbank (704) besteht, die der Regel zur Verfügung gestellt werden;
lesen (724) der genannten Kontextinformation, die von einem Prozessor der Sprache auf Anwendungsstufe geliefert wird, in der die Datenbank (704) erzeugt worden ist, als die Datenbankanfrage durchgeführt worden ist;
auswerten der Regel anhand der bereitgestellten Eingabewerte durch Verarbeitung der Entscheidungstabelle von oben nach unten und von links nach rechts, wobei, überall wo eine einzelne Zeile der Entscheidungstabelle übereinstimmt, die entsprechenden Resultat-Spalten als Resultat zurückgegeben werden, wobei die Übereinstimmung auf der Entsprechung zwischen den bereitgestellten Eingabewerten und den Bedingung-Spalten der Entscheidungstabelle basiert; und
zurückschicken des Resultats an den Prozessor der Sprache auf Anwendungsstufe, in der die Datenbank (704) erzeugt worden ist;
und
anzeigen des Resultats für den Nutzer (702) als Antwort auf die Anfrage (705).

2. Ein Computerprogrammprodukt, das computerlesbare Anweisungen umfasst, die, wenn sie in ein geeignetes System geladen und dort ausgeführt werden, die Schritte des Verfahrens nach Anspruch 1 ausführen.

3. Ein Computersystem (701), das Folgendes umfasst:
einen oder mehrere Prozessoren (706);
ein Softwareprogramm (710), das auf dem genannten Computersystem (701) ausführbar ist, wobei das Softwareprogramm (710) dazu konfiguriert ist, ein Verfahren nach Anspruch 1 ausführen.

## Revendications

1. Un procédé mis en oeuvre par ordinateur, comprenant le fait de :
fournir, dans un support de stockage (708) non transitoire, lisible par ordinateur, une base de données (704) créée dans un langage au niveau d'application et comprenant des données organisées par lignes (704a) et colonnes (704b) ;
stocker, dans un dépôt (722), un modèle d'une règle commerciale créée par un utilisateur (702), ledit modèle étant une table de décision qui est une structure matricielle contenant des colonnes de conditions (404) et des colonnes de résultat (406), le dépôt (722) incluant des métadonnées et du contenu relatif aux règles, les métadonnées incluant diverses combinaisons de conditions de valeur d'entrée dans les colonnes de conditions et leurs correspondants résultats dans les colonnes de résultat ;
recevoir de l'utilisateur (702) au moyen d'une interface utilisateur graphique une requête (705) à la base de données (704), sachant que la requête (705) est enrichie d'une fonction pour traiter la règle commerciale pourvue d'un identificateur unique de la règle ;
traiter la requête (705) pour générer un résultat correspondant à partir de la base de données (704) incluant le fait d'accéder aux lignes (704a) et aux colonnes (704b) de la base de données (704) conformément à la requête (705) et le fait d'appliquer la règle commerciale aux données auxquelles on a accédé des lignes et des colonnes, ledit fait d'appliquer la règle commerciale incluant le fait de :
chercher dans le dépôt (722) la règle d'entrée identifiée par l'identificateur unique ;
lire (723) les métadonnées de la règle du dépôt (722) ;
identifier une information contextuelle à fournir à la règle sur la base de la requête faite à la base de données, ladite information contextuelle consistant en valeurs d'entrée des lignes (704a) et des colonnes (704b) auxquelles on a accédé de la base de données (704) qui seront fournies à al règle ;
lire (724) ladite information contextuelle provenant d'un processeur du langage au niveau d'application, dans lequel la base de données (704) à été créée quand la requête faite à la base de données à été exécutée ;
évaluer la règle sur la base des valeurs d'entrée fournies en traitant la table de décision de haut en bas et de gauche à droite, sachant que, partout où une seule ligne de la table de décisions présente une concordance (*is matched),* les colonnes de résultat correspondantes sont retournées en tant que résultat, la concordance étant basé sur la correspondance entre les valeurs d'entrée fournies et les colonnes de condition de la table de décision ; et
renvoyer le résultat au processeur du langage au niveau d'application, dans lequel la base de données (704) à été créée ;
et
afficher et ainsi présenter le résultat à l'utilisateur (702) en réponse à la requête(705).

2. Un produit programme informatique comprenant des instructions lisibles par ordinateur, lesquelles, quand elles sont chargées et exécutées dans un système approprié, effectuent les étapes d'un procédé d'après la revendication 1.

3. Un système informatique (701) comprenant :
un ou plusieurs processeurs (706) ;
un programme informatique (710), pouvant être exécuté par ledit système informatique (701), le programme informatique (710) étant configuré pour effectuer un procédé d'après la revendication 1.
